(19) Europäisches Patentamt
European Patent Office
Office européen des brevets

(11) **EP 3 188 196 B1**

(12) **FASCICULE DE BREVET EUROPEEN**

(45) Date de publication et mention de la délivrance du brevet:
**04.03.2020 Bulletin 2020/10**

(21) Numéro de dépôt: **15307151.9**

(22) Date de dépôt: **28.12.2015**

(51) Int Cl.:
*H01B 3/56* *(2006.01)*     *H01B 7/282* *(2006.01)*
*H01B 3/18* *(2006.01)*     *H01B 3/30* *(2006.01)*
*H01B 3/40* *(2006.01)*     *H01B 3/10* *(2006.01)*
*H01H 33/22* *(2006.01)*     *H02B 13/055* *(2006.01)*
*H01H 33/56* *(2006.01)*

(54) **APPAREIL ÉLECTRIQUE MOYENNE OU HAUTE TENSION À ISOLATION HYBRIDE DE FAIBLE ÉPAISSEUR**

MITTEL- ODER HOCHSPANNUNGS-ELEKTROGERÄT MIT HYBRIDISOLATION GERINGER DICKE

MEDIUM- OR HIGH-VOLTAGE THIN ELECTRICAL APPARATUS WITH HYBRID INSULATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**05.07.2017 Bulletin 2017/27**

(73) Titulaire: **General Electric Technology GmbH 5400 Baden (CH)**

(72) Inventeurs:
• **GAUTSCHI, David**
  **5725 Leutwil (CH)**
• **LUESCHER, Robert**
  **5703 Seon (CH)**
• **KIEFFEL, Yannick**
  **38440 Saint-Jean-de-Bournay (FR)**
• **BIQUEZ, François**
  **73100 Pugny-Chatenod (FR)**

(74) Mandataire: **Brevalex**
  **95, rue d'Amsterdam**
  **75378 Paris Cedex 8 (FR)**

(56) Documents cités:
EP-A1- 2 816 692     WO-A1-2013/151741
WO-A1-2014/037566     WO-A1-2015/040069
FR-A1- 2 986 102     FR-A1- 2 986 103
FR-A1- 3 016 746

**Description**

**DOMAINE TECHNIQUE**

L'invention appartient au domaine de l'isolation électrique et de l'extinction des arcs électriques dans des appareils électriques moyenne ou haute tension et notamment haute tension.

Plus particulièrement, la présente invention concerne l'utilisation dans un appareil électrique moyenne ou haute tension d'une isolation hybride à faible impact environnemental basée sur la combinaison d'un milieu gazeux comprenant de l'heptafluoroisobutyronitrile en mélange avec un gaz de dilution comme gaz d'isolation électrique et/ou d'extinction des arcs électriques et d'une isolation solide de type oxyde d'aluminium et/ou résine époxy ou polyuréthane avec une éventuelle charge appliquée en couche de faible épaisseur sur les pièces conductrices soumises à un champ électrique supérieur au champ de claquage du système sans isolation solide.

Elle se rapporte également à un appareil électrique moyenne ou haute tension dans lequel l'extinction des arcs électriques est assurée par un milieu gazeux comprenant de l'heptafluoroisobutyronitrile en mélange avec un gaz de dilution et l'isolation électrique est assurée par le même milieu gazeux en combinaison avec une isolation solide de permittivité diélectrique faible du type oxydation anionique et/ou peinture polyépoxyde ou polyuréthane avec une éventuelle charge nanométrique appliquée en couche de faible épaisseur sur les pièces conductrices soumises à un champ électrique supérieur au champ de claquage du système sans isolation solide. Cet appareil électrique peut notamment être un transformateur électrique tel qu'un transformateur de puissance ou de mesure, une ligne à isolation gazeuse (ou LIG) pour le transport ou la distribution de l'électricité, un jeu de barres ou encore un appareil électrique de connexion/déconnexion (aussi appelé appareil de coupure) tel qu'un disjoncteur, un interrupteur, un combiné interrupteur-fusibles, un sectionneur, un sectionneur de mise à la terre ou un contacteur.

**ÉTAT DE LA TECHNIQUE ANTÉRIEURE**

Dans les appareils électriques de sous-station de moyenne ou haute tension, l'isolation électrique et, le cas échéant, l'extinction d'arc électrique sont typiquement assurées par un gaz qui est confiné à l'intérieur de ces appareils.

Actuellement, le gaz le plus souvent utilisé dans ce type d'appareil est l'hexafluorure de soufre ($SF_6$). Ce gaz présente, en effet, une rigidité diélectrique relativement haute, une bonne conductivité thermique et des pertes diélectriques peu élevées. Il est chimiquement inerte et non toxique pour l'homme et les animaux et, après avoir été dissocié par un arc électrique, il se recombine rapidement et presque totalement. De plus, il est ininflammable et son prix est, encore aujourd'hui, modéré.

Toutefois, le $SF_6$ a pour inconvénient majeur de présenter un potentiel de réchauffement global (PRG ou GWP pour « Global Warming Potential ») de 23 500 (relativement au $CO_2$ sur 100 ans) et une durée de séjour dans l'atmosphère de 3 200 ans, ce qui le place parmi les gaz à fort pouvoir d'effet de serre. Le $SF_6$ a donc été inscrit par le Protocole de Kyoto (1997) sur la liste des gaz dont les émissions doivent être limitées.

Le meilleur moyen de limiter les émissions du $SF_6$ consiste à limiter l'utilisation de ce gaz, ce qui a conduit les industriels à chercher des alternatives au $SF_6$.

A cet effet, un nouveau gaz présentant des propriétés d'isolation électrique suffisantes pour une application dans le domaine de l'appareillage électrique haute ou moyenne tension a été développé. Plus précisément, ce gaz est un mélange de deux molécules, l'une présente en grande majorité et la deuxième est l'heptafluoroisobutyronitrile, présent en plus faible quantité. Ce mélange gazeux a l'avantage d'être basé sur un produit de substitution au $SF_6$ présentant un GWP plus faible que le $SF_6$ mis en solution dans un gaz hôte ou de dilution à GWP très faible, comme du dioxyde de carbone ($CO_2$) dont le GWP est égal à 1, ou à GWP nul tel que l'azote ($N_2$) ou l'air.

La demande internationale WO 2014/037566 **[1]** décrit l'utilisation de tels mélanges comme gaz d'isolation dans un appareil électrique haute ou moyenne tension, associés à une isolation solide. Un gaz d'isolation particulier à savoir comprenant de l'heptafluoroisobutyronitrile, du dioxyde de carbone et de l'oxygène, l'oxygène étant présent dans ledit milieu gazeux en un pourcentage molaire compris entre 1 et 25%, a, quant à lui, été décrit dans la demande internationale WO 2015/040069 **[2]**.

Dans ces deux documents, l'épaisseur de la couche isolante, lorsque cette dernière est présente, est fonction du facteur d'utilisation du champ électrique, $\eta$, défini comme le rapport du champ électrique moyen (U/d) sur le champ électrique maximal, Emax ($\eta = U/(Emax*d)$). Ainsi, la couche est épaisse pour des facteurs d'utilisation proches de 0,3 i.e. compris entre 0,2 et 0,4 et la couche est mince ou fine pour des facteurs d'utilisation s'approchant de 0,9 i.e. supérieur à 0,5 et notamment supérieur à 0,6. De plus, une couche épaisse est définie comme une couche comprise entre 1 et 10 mm, alors qu'une couche mince ou fine est inférieure à 1 mm, notamment inférieure à 500 $\mu$m et typiquement comprise entre 60 et 100 $\mu$m.

Compte tenu de ce qui précède, les inventeurs se sont donc fixé pour but général d'améliorer encore les systèmes d'isolation hybride pour appareillages électriques haute ou moyenne tension mettant en œuvre, comme gaz d'isolation, un milieu gazeux comprenant de l'heptafluoroisobutyronitrile tout en maintenant les caractéristiques de l'appareil, du point de vue de sa capacité d'isolation et de coupure, proches de celles du SF$_6$ sans augmenter, de manière significative, la taille de l'appareil et la pression du gaz à l'intérieur.

De plus, les inventeurs se sont fixé pour but de maintenir les plages de température de service de l'appareil électrique, proches de celles des appareils équivalents SF$_6$ et ce, sans moyen de chauffe extérieur.

Ils se sont encore fixé pour but que les systèmes d'isolation hybride améliorés pour appareillages électriques haute ou moyenne tension mettant en œuvre, comme gaz d'isolation, un milieu gazeux comprenant de l'heptafluoroisobutyronitrile aient un coût de fabrication ou d'achat compatible avec une utilisation à une échelle industrielle.

Ils se sont encore fixé pour but que l'appareillage électrique moyenne ou haute tension basé sur ce système d'isolation amélioré ait une taille et une pression proches d'appareils équivalents isolés au SF$_6$ et ne présente pas de liquéfaction à la température minimale d'utilisation sans ajout de source extérieur de chauffage.

## EXPOSÉ DE L'INVENTION

Les buts fixés et d'autres encore sont atteints par l'invention qui propose l'utilisation d'un système d'isolation hybride particulier permettant d'obtenir un appareil électrique moyenne ou haute tension à faible impact environnemental.

En effet, le système d'isolation hybride mis en œuvre dans le cadre de la présente invention est basé sur un milieu gazeux comprenant de l'heptafluoroisobutyronitrile en mélange avec un gaz neutre comme gaz d'isolation électrique et/ou d'extinction des arcs électriques dans un appareil électrique moyenne ou haute tension, en combinaison avec une isolation solide, notamment de permittivité diélectrique faible, appliquée en couche d'épaisseur mince sur les pièces conductrices soumises à un champ électrique supérieur au champ de claquage de l'appareil moyenne ou haute tension sans isolation solide. De fait, l'appareil électrique moyenne ou haute tension selon l'invention présente des composants électriques qui ne sont recouverts par aucune couche diélectrique solide et aucun de ces composants électriques n'est recouvert par une couche diélectrique solide épaisse telle que définie dans la demande internationale WO 2014/037566 **[1]**. De plus, la composition de la couche diélectrique solide est particulière puisque cette dernière est réalisée en un matériau comprenant une résine polyépoxyde contenant éventuellement une charge, une résine polyuréthane contenant éventuellement une charge ou de l'oxyde d'aluminium.

De façon générale, la présente invention propose un appareil électrique moyenne ou haute tension comprenant une enceinte étanche dans laquelle se trouvent des composants électriques recouverts d'une couche diélectrique solide et un milieu gazeux assurant l'isolation électrique et/ou l'extinction des arcs électriques susceptibles de se produire dans cette enceinte comprenant de l'heptafluoroisobutyronitrile en mélange avec un gaz de dilution, l'épaisseur de la couche diélectrique solide dans ladite enceinte étant inférieure à 1 mm et ladite couche diélectrique solide étant réalisée en un matériau comprenant une résine polyépoxyde contenant éventuellement une charge, une résine polyuréthane contenant éventuellement une charge ou de l'oxyde d'aluminium.

En effet, les travaux des inventeurs ont montré que les appareils électriques moyenne ou haute tension dans lesquels l'isolation gazeuse est assurée par de l'heptafluoroisobutyronitrile sont plus sensibles à la rugosité de surface des composants électriques, comparés aux appareils électriques contenant du SF$_6$ comme gaz d'isolation. Les inventeurs ont donc proposé de réduire la rugosité de surface en déposant, sur ces composants électriques, une couche mince d'un matériau à base d'une résine polyépoxyde ou polyuréthane contenant éventuellement une charge ou d'oxyde d'aluminium.

Typiquement les composants électriques recouverts d'une couche mince d'un tel matériau sont des composants bruts de fonderie.

De plus, les inventeurs ont montré que, des performances comparables à celles exposées dans la demande internationale WO 2014/037566 **[1]** pouvaient être obtenues en supprimant les couches diélectriques solides d'une épaisseur supérieure à 1 mm, ce qui est synonyme d'une réduction quant au coût de ces appareillages électriques moyenne ou haute tension.

Dans un premier mode de réalisation, la couche diélectrique solide présente sur des composants électriques situés dans l'enceinte étanche d'un appareil électrique haute ou moyenne tension selon l'invention est réalisée en un matériau comprenant une résine polyépoxyde contenant éventuellement au moins une charge ou une résine polyuréthane contenant éventuellement au moins une charge, ladite couche ayant une épaisseur comprise entre 10 et 500 $\mu$m.

Dans ce mode de réalisation, la résine polyépoxyde de la couche diélectrique solide mise en œuvre peut comprendre ou être constituée par une résine polyépoxyde-polysiloxane ou une résine polyépoxyde-polyester.

Lorsque la résine polyépoxyde ou la résine polyuréthane comprend au moins une charge, cette dernière se présente sous forme de particules telles que des nanoparticules. Avantageusement, cette charge est en un matériau choisi dans le groupe constitué par l'alumine, la silice, l'oxyde de titane, le carbonate de calcium, l'oxyde de zinc, la wollastonite, le quartz, le graphite, l'argile et le talc.

Dans un second mode de réalisation, la couche diélectrique solide présente sur des composants électriques situés dans l'enceinte étanche d'un appareil électrique haute ou moyenne tension selon l'invention est réalisé en un

matériau comprenant de l'oxyde d'aluminium, ladite couche ayant une épaisseur comprise entre 10 et 100 $\mu$m.

Avantageusement, la couche diélectrique solide présente à la surface de composants électriques situés dans l'enceinte étanche de l'appareil électrique moyenne ou haute tension selon l'invention se présente sous forme d'un film ou d'une poudre.

L'isolation gazeuse dans l'enceinte étanche de l'appareil électrique moyenne ou haute tension selon l'invention est assurée par de l'heptafluoroisobutyronitrile en mélange avec un agent de dilution. Ce dernier est avantageusement choisi parmi le dioxyde de carbone, l'azote, l'oxygène, l'air et un de leurs mélanges.

Avantageusement, l'appareil électrique moyenne ou haute tension selon l'invention est un transformateur électrique à isolation gazeuse, une ligne à isolation gazeuse pour le transport ou la distribution de l'électricité, un élément de raccordement aux autres équipements du réseau ou un appareil électrique de connexion/déconnexion.

La présente invention concerne également l'utilisation d'heptafluoroisobutyronitrile en mélange avec un gaz de dilution tel que précédemment défini comme gaz d'isolation électrique et/ou d'extinction des arcs électriques dans un appareil électrique moyenne ou haute tension dont les composants électriques sont recouverts d'une couche isolante solide dont l'épaisseur est inférieure ou égale à 1 mm et réalisée en un matériau tel que précédemment défini i.e. comprenant une résine polyépoxyde contenant éventuellement une charge, une résine polyuréthane contenant éventuellement une charge ou de l'oxyde d'aluminium.

## EXPOSÉ DÉTAILLÉ DE MODES DE RÉALISATION PARTICULIERS

L'invention est basée sur l'utilisation, dans un appareil électrique moyenne ou haute tension, d'un système d'isolation hybride à faible impact environnemental combinant un mélange gazeux comprenant de l'heptafluoroisobutyronitrile et une isolation solide de permittivité diélectrique faible appliquée en couche mince sur les pièces conductrices soumises à un champ électrique supérieur au champ de claquage du système sans isolation solide.

Dans ce qui précède et ce qui suit, l'expression « moyenne tension » est utilisée dans son acceptation habituelle, à savoir que le terme « moyenne tension » désigne une tension qui est supérieure à 1 000 volts en courant alternatif et à 1 500 volts en courant continu mais qui ne dépasse pas 52 000 volts en courant alternatif et 75 000 volts en courant continu.

Dans ce qui précède et ce qui suit, l'expression « haute tension » est utilisée dans son acceptation habituelle, à savoir que l'expression « haute tension » désigne une tension qui est strictement supérieure à 52 000 volts en courant alternatif et à 75 000 volts en courant continu.

Un appareil électrique moyenne ou haute tension comporte principalement une enveloppe extérieure ou enceinte, longitudinale délimitant un volume creux et un ou plusieurs composant(s) électrique(s) qui est/sont agencés à l'intérieur de cette enveloppe.

Le volume intérieur de l'enveloppe est fermé de manière étanche aux gaz et est rempli par un gaz d'isolation électrique et d'extinction d'arc électrique qui comprend, dans le cadre de la présente invention, de l'heptafluoroisobutyronitrile et un gaz de dilution.

Dans le cadre de la présente invention, tout ou partie des composants électriques situés dans l'enceinte étanche de l'appareil électrique présentent, à leur surface, une couche diélectrique.

En effet, dans le but d'améliorer la tenue diélectrique de l'ensemble, le mélange gazeux comprenant de l'heptafluoroisobutyronitrile et un gaz de dilution est utilisé, dans un système d'isolation hybride, en combinaison avec une isolation solide appliquée en une couche isolante mince sur les pièces conductrices soumises à un champ électrique supérieur au champ de claquage du système sans isolation solide.

Les pièces conductrices recouvertes par cette couche isolante sont brutes de fonderie. En d'autres termes, ces pièces sont brutes et n'ont subi aucun traitement destiné à modifier leur état de surface du type polissage, préalablement au dépôt de la couche isolante.

La couche isolante solide mise en œuvre dans l'invention présente une permittivité relative faible. Par « permittivité relative faible », on entend une permittivité relative inférieure ou égale à 6. On rappelle que la permittivité relative, également appelée constante diélectrique, d'un matériau, qui est notée $\varepsilon_r$, est une grandeur sans dimension qui peut être définie par les formules (I) et (II) suivantes :

$$\varepsilon_r = \varepsilon / \varepsilon_0 \quad (I),$$

avec

$$\varepsilon = (e * C)/S \text{ et } \varepsilon_0 = 1/(36\pi * 10^9) \quad (II)$$

dans lesquelles :

- ε correspond à la permittivité absolue (exprimée en Farads/mètre) du matériau ;
- $\varepsilon_0$ correspond à la permittivité (exprimée en Farads/mètre) du vide ;
- C correspond à la capacité (exprimée en Farads) d'un condensateur plan comprenant deux électrodes parallèles entre lesquelles est disposée une couche du matériau pour lequel on veut déterminer la permittivité, cette couche représentant une éprouvette ;
- e correspond à la distance (exprimée en mètres) entre les deux électrodes parallèles du condensateur plan, ce qui correspond, dans notre cas, à l'épaisseur de l'éprouvette; et
- S correspond à la surface (exprimée en mètres carrés) de chaque électrode constitutive du condensateur plan.

Dans le cadre de la présente invention, la capacité est déterminée comme dans la norme CEI 60250-ed1.0, à savoir en utilisant un condensateur comprenant deux électrodes circulaires d'un diamètre allant de 50 à 54 mm, solidaires de l'éprouvette constituée du matériau, ces électrodes étant obtenues par pulvérisation d'une peinture conductrice avec un dispositif de garde. L'éprouvette présente des dimensions de 100 mm x 100 mm et une épaisseur de 3 mm. La distance entre les électrodes du condensateur, qui correspond à la grandeur e mentionnée ci-dessus, est donc de 3 mm.

Par ailleurs, la capacité est déterminée sous un niveau d'excitation de 500 volts RMS, à une fréquence de 50 hertz, sous une température de 23°C et une humidité relative de 50%. La durée d'application de la tension susmentionnée est de 1 min.

Par « couche isolante/diélectrique solide mince », on entend dans le cadre de la présente invention que le matériau diélectrique, déposé ou appliqué sur les composants électriques ou pièces conductrices, présente une épaisseur inférieure à 1 mm, notamment inférieure ou égale à 750 μm et, en particulier notamment inférieure ou égale à 500 μm et ce, quelle que soit la pièce conductrice ou partie de pièce conductrice sur laquelle il est déposé. En d'autres termes, aucune des pièces conductrices dans l'enceinte de l'appareil électrique selon l'invention ne présente une couche diélectrique avec une épaisseur supérieure ou égale à 1 mm. L'épaisseur de la couche est déterminée lors de la préparation des éléments constituant cet appareil.

Dans le cadre de l'invention, la couche isolante est appliquée en couche mince sur les pièces conductrices soumises à un champ électrique supérieur au champ de claquage du système sans isolation solide. Plus particulièrement, la couche diélectrique mince est typiquement déposée sur les pièces conductrices à l'endroit où le coefficient d'utilisation du champ électrique est supérieur ou égal à 0,2 et notamment supérieur ou égal à 0,3. Pour rappel, le facteur ou coefficient d'utilisation du champ électrique, η, est défini comme le rapport du champ électrique moyen (U/d) sur le champ électrique maximal, Emax (η = U/(Emax*d)).

La couche isolante solide mise en œuvre dans le cadre de la présente invention peut comprendre un seul matériau diélectrique ou plusieurs matériaux diélectriques différents. De plus, la composition de la couche isolante i.e. la nature du ou des matériau(x) diélectrique(s) qu'elle comprend peut différer en fonction de la pièce conductrice ou partie de pièce conductrice sur laquelle la couche isolante solide est déposée.

Toutefois, dans le cadre de la présente invention, le ou les matériau(x) de la couche isolante comprend/comprennent une résine polyépoxyde contenant éventuellement une charge, une résine polyuréthane contenant éventuellement une charge ou de l'oxyde d'aluminium.

Dans un premier mode de réalisation, la couche diélectrique solide présente sur des composants électriques situés dans l'enceinte étanche d'un appareil électrique haute ou moyenne tension selon l'invention est réalisée en un matériau comprenant ou constitué d'une résine polyépoxyde contenant éventuellement au moins une charge ou d'une résine polyuréthane contenant éventuellement au moins une charge, ladite couche ayant une épaisseur comprise entre 10 et 500 μm.

Par « résine polyépoxyde », on entend, dans le cadre de la présente invention, une résine thermodurcissable obtenue à partir de la réaction de monomères identiques ou différents et/ou d'oligomères identiques ou différents comprenant des groupes fonctionnels oxiranes (aussi appelés fonctions époxy) avec un ou plusieurs durcisseurs qui typiquement sont des amines comme une polyamine, des amides comme un polyamide, des acides carboxyliques ou des anhydrides d'acides. Une résine polyépoxyde est également désignée, dans la littérature, sous l'appellation « résine époxy » ou encore « résine époxyde ».

L'homme du métier connaît différents monomères ou oligomères comprenant des fonctions époxy utilisables en tant que précurseurs de résine polyépoxyde. De tels monomères ou oligomères correspondent notamment aux résines époxydées décrites dans la demande internationale WO 2010/139906 **[3]** et dans la demande de brevet EP 1 359 197 **[4]**.

La composition à partir de laquelle la résine polyépoxyde est obtenue peut contenir, en plus d'un ou plusieurs monomères différents et/ou d'un ou plusieurs oligomères différents comprenant des fonctions époxy et d'un ou plusieurs durcisseurs, au moins un autre élément tel qu'un polysiloxane, un polyester ou un précurseur de tels polymères. Dans ces cas, la résine polyépoxyde sera une résine polyépoxyde-polysiloxane ou une résine polyépoxyde-polyester. La demande de brevet EP 1 359 197 [4] décrit plusieurs exemples de résine polyépoxyde-polysiloxane utilisables dans le cadre de la présente invention.

A titre d'exemples de résines polyépoxydes utilisables dans le cadre de la présente invention, on peut citer Amercoat 385®, Amercoat 4093®, PSX 700® et Nuklad 105® commercialisés par Ameron.

Par « résine polyuréthane », on entend un polymère d'uréthane produit par la réaction d'un isocyanate et d'un polyol.

La résine polyépoxyde ou polyuréthane déposée sur les composants électriques de l'appareil électrique selon l'invention peut être non chargée ou chargée. Lorsqu'elle est chargée, la charge peut se présenter sous forme de particules. Les particules mises en œuvre dans le cadre de la présente invention peuvent présenter des formes variées, telles que formes sphéroïdes, ellipsoïdes, hexagonales, de bâtonnets ou en étoile. La distribution granulométrique moyenne de ces particules est typiquement comprise entre 10 nm et 1 $\mu$m et notamment entre 20 et 900 nm. On peut donc parler de nanoparticules.

Toute charge connue de l'homme du métier est utilisable dans le cadre de la présente invention. Toutefois, cette charge est non conductrice de l'électricité afin de ne générer aucune poussière conductrice. Avantageusement, cette charge est en un matériau choisi dans le groupe constitué en un matériau choisi dans le groupe constitué par l'alumine, la silice, l'oxyde de titane, le carbonate de calcium, l'oxyde de zinc, la wollastonite, le quartz, le graphite, l'argile et le talc.

L'homme du métier connaît différentes techniques permettant de déposer ou d'appliquer une résine polyépoxyde ou polyuréthane chargée ou non chargée ou une composition précurseur d'une telle résine sur les pièces conductrices de l'appareil électrique selon l'invention. A titre d'exemples de techniques de dépôt ou d'application, on peut citer une pulvérisation avec ou sans air comprimé, une projection au pistolet pneumatique ou électrostatique, une trempe ou une électrodéposition cationique (ou cataphorèse).

Dans un second mode de réalisation, la couche diélectrique solide présente sur des composants électriques situés dans l'enceinte étanche d'un appareil électrique haute ou moyenne tension selon l'invention est réalisée en un matériau comprenant de l'oxyde d'aluminium ($Al_2O_3$ ou alumine) ou constitué d'$Al_2O_3$, ladite couche ayant une épaisseur comprise entre 10 et 100 $\mu$m.

Avantageusement, cette couche diélectrique solide est produite en soumettant les composants électriques à base d'aluminium ou d'un alliage contenant de l'aluminium à une oxydation électrolytique ou oxydation cationique. Cette technique de passivation d'une surface en aluminium ou en un alliage contenant de l'aluminium par dépôt d'une couche d'alumine est bien connue de l'homme du métier qui connaît différents types de bain utilisables pour un tel traitement comme un bain d'acide sulfurique ou un bain d'acide sulfurique et d'acide oxalique.

Avantageusement, la couche diélectrique solide présente à la surface de composants électriques situés dans l'enceinte étanche de l'appareil électrique moyenne ou haute tension selon l'invention se présente sous forme d'un film ou d'une poudre.

En effet, en fonction de la résine ou de la composition précurseur de cette dernière, de la technique d'application ou de la technique d'oxydation cationique mise en œuvre, le dépôt obtenu peut se présenter sous forme pulvérulente ou d'un dépôt filmogène.

Par « dépôt filmogène », on entend un dépôt donnant naissance à un film, une fois appliqué sur la surface d'une pièce électrique, la formation du film pouvant résulter de l'évaporation d'un solvant coexistant dans la composition déposée et/ou de la transformation chimique dans ladite composition (laquelle transformation peut être une réaction de polymérisation, une réaction de polycondensation, une réaction de polyaddition, une réaction d'oxydation ou encore une réaction de vulcanisation).

Dans l'appareil électrique selon la présente invention, l'isolation gazeuse met en œuvre un mélange gazeux comprenant de l'heptafluoroisobutyronitrile.

L'heptafluoroisobutyronitrile de formule (III) : $(CF_3)_2CFCN$ (III), également désigné i-$C_3F_7CN$, correspond au 2,3,3,3-tétrafluoro-2-trifluorométhyl propanenitrile, de numéro CAS : 42532-60-5, présentant un point d'ébullition de -4,7°C à 1013 hPa (point d'ébullition mesuré selon ASTM D1120-94 "Standard Test Method for Boiling Point of Engine Coolants").

La tenue diélectrique relative de l'heptafluoroisobutyronitrile de formule (III), normalisée par rapport au $SF_6$ est de 2.2, ladite tenue diélectrique étant mesurée à pression atmosphérique, sous tension continue, entre deux électrodes en acier de diamètre 2,54 cm et espacées de 0,1 cm.

Ainsi, l'heptafluoroisobutyronitrile de formule (III) tel que précédemment défini, qui n'est ni toxique, ni corrosif, ni inflammable et qui présente un PRG faible par rapport à celui du $SF_6$, est doté de propriétés d'isolation électrique et d'extinction des arcs électriques propres à lui permettre de remplacer en mélange avec un gaz de dilution, le $SF_6$ comme gaz d'isolation et/ou d'extinction d'arc dans des appareils électriques haute tension.

Le mélange mis en œuvre dans le cadre de la présente invention comprend de l'heptafluoroisobutyronitrile et un gaz de dilution. Ce dernier est également connu sous l'appellation « gaz de mélange » ou « gaz porteur ».

Dans le cadre de l'invention, l'heptafluoroisobutyronitrile de formule (III) tel que précédemment défini est utilisé en mélange avec un gaz de dilution qui sera choisi parmi les gaz qui répondent aux quatre critères suivants :

(1) présenter une température d'ébullition très basse, inférieure à la température minimale d'utilisation de l'appareil ;
(2) présenter une rigidité diélectrique supérieure ou égale à celle du dioxyde de carbone dans des conditions d'essai identiques (même appareillage, même configuration géométrique, mêmes paramètres opératoires, ...) à celles utilisées pour mesurer la rigidité diélectrique du dioxyde de carbone ;
(3) être dénués de toxicité pour l'homme et les animaux ; et
(4) présenter un PRG plus faible que celui de l'heptafluoroisobutyronitrile de sorte que la dilution de l'heptafluoroisobutyronitrile par le gaz de dilution ait également pour effet d'abaisser l'impact environnemental de l'heptafluoroisobutyronitrile puisque le PRG d'un mélange gazeux est une moyenne pondérée, dérivée de la somme de la fraction de masse de chacune des substances multipliée par le PRG de chacun des composants.

En particulier, un gaz de dilution utilisable dans le cadre de la présente invention est un gaz neutre dont le PRG est très faible, voire nul. Aussi, le gaz de dilution est, typiquement, du dioxyde de carbone dont le PRG est égal à 1, de l'azote, de l'oxygène ou de l'air, avantageusement sec, dont le PRG est égal à 0, ou bien des mélanges de ceux-ci. Plus particulièrement, un gaz de dilution utilisable dans le cadre de la présente invention est choisi parmi le dioxyde de carbone, l'azote, l'oxygène, l'air, avantageusement sec, et un de leurs mélanges.

Avantageusement, l'heptafluoroisobutyronitrile tel que précédemment défini est présent dans le mélange l'heptafluoroisobutyronitrile/gaz de dilution en un pourcentage molaire ($M_{he}$) qui est au moins égal à 80% du pourcentage molaire M, déterminé par la formule (IV) :

$$M = (P_{he}/P_{mélange}) \times 100 \quad (IV)$$

dans laquelle $P_{mélange}$ représente la pression totale du mélange à 20°C dans l'appareil électrique et $P_{he}$ représente la pression partielle, exprimée dans la même unité, qui équivaut à 20°C à la pression de vapeur saturante que présente l'heptafluoroisobutyronitrile tel que précédemment défini à la température minimale d'utilisation de l'appareil électrique.

La pression $P_{he}$ est, elle-même, approximée par la formule (V) :

$$P_{he} = (PVS_{he} \times 293)/(T_{min} + 273) \quad (V)$$

dans laquelle $PVS_{he}$ représente la pression de vapeur saturante de l'heptafluoroisobutyronitrile tel que précédemment défini à la température minimale $T_{min}$, exprimée en degrés Celcius, d'utilisation de l'appareil électrique.

Ainsi, les propriétés diélectriques du milieu gazeux sont les plus élevées possibles et se rapprochent au mieux de celles du $SF_6$.

Avantageusement, dans le cadre de la présente invention, la température minimale d'utilisation $T_{min}$ est choisie parmi 0°C, -5°C, -10°C, -15°C, -20°C, -25°C, -30°C, -35°C, -40°C, -45°C et -50°C et, en particulier, choisie parmi 0°C, -5°C, -10°C, -15°C, -20°C, -25°C, -30°C, -35°C et -40°C.

Dans une 1$^{ère}$ forme de mise en œuvre, l'appareil électrique est un appareil moyenne tension ou haute tension pour lequel la présence partielle du mélange à l'état liquide n'est pas de nature à réduire l'isolation. Dans ce cas, il est possible d'utiliser un mélange dans lequel l'heptafluoroisobutyronitrile est présent en un pourcentage molaire $M_{he}$, supérieur au pourcentage molaire M. Auquel cas, le pourcentage molaire de l'heptafluoroisobutyronitrile est, typiquement, compris entre 95% et 130%, mieux encore entre 97% et 120%, idéalement entre 99% et 110% du pourcentage molaire M tel que précédemment défini. Dans un tel cas, la tenue diélectrique de l'appareil sera testée à une pression partielle d'heptafluoroisobutyronitrile dans le mélange gazeux pour laquelle le gaz ne présente pas de liquéfaction à la température minimale de service afin de valider la tenue diélectrique dudit appareil sur l'ensemble de sa plage de températures.

Dans une 2$^{nde}$ forme de mise en œuvre, l'appareil électrique est un appareil moyenne ou haute tension dans lequel l'isolation peut être affectée par la présence de phase liquide. Dans cette forme de mise en œuvre, il est souhaitable que le mélange heptafluoroisobutyronitrile/ gaz de dilution soit exclusivement ou quasi exclusivement à l'état gazeux dans toute la gamme des températures d'utilisation de cet appareil. Il est donc avantageux que l'heptafluoroisobutyronitrile soit présent dans ce mélange en un pourcentage molaire ($M_{he}$) qui ne dépasse pas 100% du pourcentage molaire M afin de ne pas présenter de phase de liquéfaction à la température minimale d'utilisation. Auquel cas, le pourcentage molaire de l'heptafluoroisobutyronitrile est, avantageusement, compris entre 95% et 100% et, en particulier, entre 98% et 100% du pourcentage molaire M tel que précédemment défini.

A titre d'exemple particulier, le mélange gazeux mis en œuvre dans le cadre de la présente invention peut ne contenir que de l'heptafluoroisobutyronitrile et du dioxyde de carbone et donc n'être constitué que de ces deux composés. Dans ce cas, le mélange gazeux comprend de 2 à 15% molaire d'heptafluoroisobutyronitrile et de 85 à 98% molaire de dioxyde de carbone et, en particulier, de 4 à 10% molaire d'heptafluoroisobutyronitrile et de 90 à 96% molaire de dioxyde de carbone.

En variante, ce mélange gazeux peut contenir au moins un autre élément en plus de l'heptafluoroisobutyronitrile et du dioxyde de carbone. Cet autre élément peut être tout composé habituellement utilisé dans l'isolation électrique des appareillages électriques haute ou moyenne tension. Avantageusement, un tel composé est choisi parmi l'azote, l'oxygène, l'air, avantageusement sec, et un de leurs mélanges. Typiquement, cet autre élément est de l'oxygène.

Dans cette variante, le mélange gazeux comprend de 2 à 15% molaire d'heptafluoroisobutyronitrile, de 70 à 97% molaire de dioxyde de carbone et de 1 à 15% molaire d'au moins un autre élément tel que précédemment défini et notamment de 1 à 15% molaire d'oxygène. En particulier, le mélange gazeux comprend de 4 à 10% molaire d'heptafluoroisobutyro-nitrile, de 80 à 94% molaire de dioxyde de carbone et de 2 à 10% molaire d'au moins un autre élément tel que précédemment défini et notamment de 2 à 10% molaire d'oxygène.

Avantageusement, l'heptafluoroisobutyronitrile est présent dans l'appareil électrique sous forme entièrement gazeuse quelle que soit la température d'utilisation de cet appareil. Il convient donc que la pression de l'heptafluoroisobutyronitrile à l'intérieur de l'appareil électrique soit choisie en fonction de la pression de vapeur saturante (PVS) que présente l'heptafluoroisobutyronitrile à la température la plus basse d'utilisation dudit appareil.

Toutefois, comme le remplissage en gaz des appareils électriques se fait usuellement à température ambiante, la pression de l'heptafluoroisobutyronitrile à laquelle on se réfère pour remplir l'appareil électrique est la pression qui correspond, à la température de remplissage, par exemple 20°C, à la PVS que présente l'heptafluoroisobutyronitrile à la température la plus basse d'utilisation dudit appareil électrique.

A titre d'exemple, le Tableau I ci-après indique les pressions de vapeur saturante, notées $PVS_{i\text{-}C3F7CN}$ et exprimées en hectopascals, que présente l'heptafluoroisobutyronitrile aux températures de 0°C, - 5°C, -10°C, -15°C, -20°C, -25°C, -30°C et -40°C, ainsi que les pressions, notées $P_{i\text{-}C3F7CN}$ et exprimées en hectopascals, qui correspondent à 20°C à ces pressions de vapeur saturante.

Tableau I : pressions de vapeur saturante du i-$C_3F_7$CN

| Températures | $PVS_{i\text{-}C3F7CN}$ (hPa) | $P_{i\text{-}C3F7CN}$ (hPa) |
|---|---|---|
| 0°C | 1177 | 1264 |
| -5°C | 968 | 1058 |
| -10°C | 788 | 877 |
| -15°C | 634 | 720 |
| -20°C | 504 | 583 |
| -25°C | 395 | 466 |
| -30°C | 305 | 368 |
| -35°C | 232 | 286 |
| -40°C | 173 | 218 |

Conformément à l'invention, cet appareil électrique peut être, en premier lieu, un transformateur électrique à isolation gazeuse comme, par exemple, un transformateur de puissance ou un transformateur de mesure.

Il peut également être une ligne à isolation gazeuse, aérienne ou souterraine, ou un jeu de barres pour le transport ou la distribution de l'électricité.

Il peut également être un élément de raccordement aux autres équipements du réseau comme, par exemple, les traversées aériennes ou les traversées de cloison.

Enfin, il peut aussi être un appareil électrique de connexion/déconnexion (aussi appelé appareil de coupure) comme, par exemple, un disjoncteur, un interrupteur, un sectionneur, un combiné interrupteur-fusibles, un sectionneur de mise à la terre ou un contacteur.

*Exemple d'application et remplissage*

Selon l'appareil électrique, la pression préconisée de remplissage en milieu d'isolation électrique et/ou d'extinction des arcs électriques varie. Elle est toutefois, typiquement de plusieurs bars (i.e. plusieurs milliers d'hectopascals).

L'heptafluoroisobutyronitrile est utilisé en mélange avec du dioxyde de carbone pour pouvoir obtenir le niveau de pression de remplissage préconisé.

Ainsi, par exemple, un appareil prévu pour, d'une part, être utilisé à une température minimale de -30°C, et, d'autre part, être rempli à 9,2 bars (i.e. 9 200 hPa), sera rempli avec 0,368 bar (i.e. 368 hPa) d'heptafluoroisobutyronitrile et 8,832 bars (i.e. 8832 hPa) de dioxyde de carbone.

Un tel appareil est notamment un appareil GIB 420 kV d'Alstom conçu pour une application à -30°C rempli avec $CO_2$/i-$C_3F_7CN$. Pour cet appareil de température minimale d'application de -30°C, l'heptafluoroisobutyronitrile sera à une pression de 0,368 bar absolu mesurée à 20°C. Un complément de $CO_2$ sera effectué pour obtenir les propriétés finales du mélange gazeux. La pression partielle d'heptafluoroisobutyronitrile étant de 0,368 bar absolu mesurée à 20°C et la pression totale du gaz de 5 bars absolus, le ratio molaire de i-$C_3F_7CN$ est alors de 0,368/5 soit environ 7,4%.

Afin de déterminer la composition du mélange gazeux au remplissage, on détermine le pourcentage molaire M en heptafluoroisobutyronitrile à la pression de remplissage de l'appareil électrique préconisée, qui représente la proportion maximale d'heptafluoroisobutyronitrile que doit comporter le mélange heptafluoroisobutyronitrile/$CO_2$ pour qu'il n'y ait pas de liquide dans l'enceinte de l'appareil électrique. Le pourcentage molaire M est donné par la formule $M = (P_{he}/P_{mélange}) \times 100$, avec $P_{he}$ qui représente la pression équivalente, à la température de remplissage (typiquement de l'ordre de 20°C), à la pression de vapeur saturante PVS de l'heptafluoroiso-butyronitrile à la température minimale d'utilisation $T_{min}$ de l'appareil ($P_{he} = (PVS_{he} \times 293) / (273 + T_{min})$).

Ensuite, on choisit le pourcentage molaire $M_{he}$ de remplissage en fonction de M. Dans certains cas, il est impératif que $M_{he}$ ne dépasse pas M pour éviter toute présence de liquide.

Par contre, il est parfois possible, par exemple en moyenne tension ou pour certains appareils électriques haute tension pour lesquels leur isolation n'est pas affectée par la présence de phase liquide, d'avoir un peu de liquide à basse ou très basse température, auquel cas $M_{he}$ peut atteindre 110% voire 130% de M. Par ailleurs, comme l'heptafluoroisobutyronitrile possède une meilleure tenue diélectrique que les gaz neutres, il est souhaitable d'optimiser le remplissage par l'heptafluoroisobutyronitrile : on choisit donc, de préférence, $M_{he}$ de sorte qu'il soit supérieur ou égal à 80% de M, mieux encore supérieur ou égal à 95% de M, mieux encore supérieur ou égal à 98%·de M, par exemple égal à 99% de M.

Le remplissage de l'appareil est effectué à l'aide d'un mélangeur de gaz permettant de contrôler le rapport entre l'heptafluoroisobutyronitrile et dioxyde de carbone, ce rapport étant maintenu constant et égal à environ 7,4% en pression tout au long du remplissage grâce à l'utilisation de débitmètre massique de précision.

*Association à une isolation solide*

Afin d'obtenir l'équivalence diélectrique par rapport au $SF_6$, sans dégrader ses performances à basse température, ni augmenter sa pression totale, le mélange gazeux présenté ci-dessus est utilisé en combinaison avec une isolation solide de permittivité diélectrique faible appliquée sur les pièces conductrices soumises à un champ électrique supérieur au champ de claquage du système sans isolation solide.

Dans le cadre de la présente invention, trois isolations solides ont été testées :

- un revêtement en poudre d'une résine thermoducissable de type époxyde (selon DIN EN ISO 12944 D5M avec une épaisseur de 100 $\mu$m ;
- un revêtement d'oxyde d'aluminium obtenu par anodisation dure par courant électrique dans un bain acide, d'une épaisseur d'environ 50 $\mu$m ; et
- une peinture epoxyde blanche avec une épaisseur comprise entre 100 et 400 $\mu$m.

Ces trois revêtements ont été appliqués à des enveloppes et pièces en aluminium obtenues par coulée sable sans traitement de surface additionnel (brutes de fonderie) de type polissage avant dépôt du revêtement.

La tenue diélectrique en choc de foudre est de 650 kV sur pièce brute non revêtue. Les pièces revêtues des trois revêtements ci-dessous montrent une amélioration de leur tenue sous choc de foudre de l'ordre de 50 kV, soit une amélioration de 7,6% par rapport aux pièces brutes. De manière comparative, une pièce non brute de fonderie et ébavurée présente une amélioration de la tenue diélectrique en choc de foudre de 25 kV.

L'influence positif du traitement de surface est particulièrement remarquable dans le cas où les surfaces des pièces sont brutes et présentent une rugosité importante. Ainsi, le traitement de surface i.e. le dépôt d'un revêtement solide selon l'invention participe au lissage de la pièce. Dans le cas de pièces polies et présentant des rugosités faibles, l'ajout d'un revêtement n'améliore pas, de façon significative, la tenue diélectrique de l'ensemble.

**RÉFÉRENCES**

**[1]** Demande internationale WO 2014/037566, au nom de Alstom Technology Ltd, publiée le 13 mars 2014.

[2] Demande internationale WO 2015/040069, au nom de Alstom Technology Ltd, publiée le 26 mars 2015.

[3] Demande internationale WO 2010/139906, au nom de Arkema France, publiée le 9 décembre 2010.

[4] Demande de brevet EP 1 359 197, au nom de SigmaKalon Group, publiée le 5 novembre 2003.

**Revendications**

1. Appareil électrique moyenne ou haute tension comprenant une enceinte étanche dans laquelle se trouvent des composants électriques recouverts d'une couche diélectrique solide et un milieu gazeux assurant l'isolation électrique et/ou l'extinction des arcs électriques susceptibles de se produire dans cette enceinte comprenant de l'heptafluoroisobutyronitrile en mélange avec un gaz de dilution,
**caractérisé en ce que** l'épaisseur de la couche diélectrique solide sur les composants électriques où le coefficient d'utilisation du champ électrique est supérieur ou égal à 0,2 est inférieure à 1 mm et
**en ce que** ladite couche diélectrique solide est réalisée en un matériau comprenant une résine polyépoxyde contenant éventuellement une charge, une résine polyuréthane contenant éventuellement une charge ou de l'oxyde d'aluminium.

2. Appareil électrique selon la revendication 1, **caractérisé en ce que** lesdits composants électriques sont bruts de fonderie.

3. Appareil électrique selon la revendication 1 ou 2, **caractérisé en ce que** ladite couche diélectrique solide réalisée en un matériau comprenant une résine polyépoxyde contenant éventuellement une charge ou une résine polyuréthane contenant éventuellement une charge a une épaisseur comprise entre 10 et 500 $\mu$m.

4. Appareil électrique selon l'une quelconque des revendications 1 à 3, **caractérisé en ce que** ladite résine polyépoxyde comprend ou est constituée par une résine polyépoxyde-polysiloxane ou une résine polyépoxyde-polyester.

5. Appareil électrique selon l'une quelconque des revendications 1 à 4, **caractérisé en ce que** ladite charge se présente sous forme de particules telles que des nanoparticules.

6. Appareil électrique selon l'une quelconque des revendications 1 à 5, **caractérisé en ce que** ladite charge est en un matériau choisi dans le groupe constitué par l'alumine, la silice, l'oxyde de titane, le carbonate de calcium, l'oxyde de zinc, la wollastonite, le quartz, le graphite, l'argile et le talc.

7. Appareil électrique selon la revendication 1 ou 2, **caractérisé en ce que** ladite couche diélectrique solide réalisée en un matériau comprenant de l'oxyde d'aluminium a une épaisseur comprise entre 10 et 100 $\mu$m.

8. Appareil électrique selon l'une quelconque des revendications 1 à 7, **caractérisé en ce que** ladite couche diélectrique solide se présente sous forme d'un film ou d'une poudre.

9. Appareil électrique selon l'une quelconque des revendications 1 à 8, **caractérisé en ce que** ledit gaz de dilution est choisi parmi le dioxyde de carbone, l'azote, l'oxygène, l'air et un de leurs mélanges.

10. Appareil électrique selon l'une quelconque des revendications précédentes, **caractérisé en ce que** ledit appareil est un transformateur électrique à isolation gazeuse, une ligne à isolation gazeuse pour le transport ou la distribution de l'électricité, un élément de raccordement aux autres équipements du réseau ou un appareil électrique de connexion/déconnexion.

11. Utilisation d'heptafluoroisobutyronitrile en mélange avec un gaz de dilution tel que défini la revendication 1 ou 9 comme gaz d'isolation électrique et/ou d'extinction des arcs électriques dans un appareil électrique moyenne ou haute tension dont les composants électriques où le coefficient d'utilisation du champ électrique est supérieur ou égal à 0,2 sont recouverts d'une couche isolante solide dont l'épaisseur est inférieure à 1 mm et réalisée en un matériau comprenant une résine polyépoxyde contenant éventuellement une charge, une résine polyuréthane contenant éventuellement une charge ou de l'oxyde d'aluminium tel que défini à l'une quelconque des revendications 1 à 8.

# EP 3 188 196 B1

## Patentansprüche

1. Elektrisches Mittel- oder Hochspannungsgerät, umfassend ein dichtes Gehäuse, in dem sich elektrische Komponenten, die mit einer festen dielektrischen Schicht bedeckt sind, und ein gasförmiges Medium befinden, das die elektrische Isolierung und / oder das Löschen von Lichtbögen gewährleistet, die in diesem Gehäuse auftreten können und Heptafluorisobutyronitril in Mischung mit einem Verdünnungsgas umfasst, **dadurch gekennzeichnet, dass** die Dicke der festen dielektrischen Schicht, wo der Koeffizient zur Verwendung des elektrischen Feldes größer oder gleich 0,2 ist, kleiner 1 mm ist, und dass die feste dielektrische Schicht aus einem Material hergestellt ist, das ein Polyepoxidharz, das gegebenenfalls einen Füllstoff enthält, ein Polyurethanharz, das gegebenenfalls einen Füllstoff enthält, oder Aluminiumoxid umfasst.

2. Elektrisches Gerät nach Anspruch 1, **dadurch gekennzeichnet, dass** die elektrischen Komponenten Rohgussteile sind.

3. Elektrisches Gerät nach Anspruch 1 oder 2, **dadurch gekennzeichnet, dass** die feste dielektrische Schicht, die aus einem Material hergestellt ist, das ein Polyepoxidharz, das gegebenenfalls einen Füllstoff enthält, oder ein Polyurethanharz umfasst, das gegebenenfalls einen Füllstoff enthält, eine Dicke zwischen 10 und 500 $\mu$m hat.

4. Elektrisches Gerät nach einem der Ansprüche 1 bis 3, **dadurch gekennzeichnet, dass** das Polyepoxidharz ein Polyepoxid-Polysiloxan-Harz oder ein Polyepoxid-PolyesterHarz umfasst oder daraus besteht.

5. Elektrisches Gerät nach einem der Ansprüche 1 bis 4, **dadurch gekennzeichnet, dass** der Füllstoff in Form von Partikeln wie Nanopartikeln vorliegt.

6. Elektrisches Gerät nach einem der Ansprüche 1 bis 5, **dadurch gekennzeichnet, dass** der Füllstoff aus einem Material besteht, das aus der Gruppe ausgewählt ist, die aus Aluminiumoxid, Siliciumdioxid, Titanoxid, Calciumcarbonat, Zinkoxid, Wollastonit, Quarz, Graphit, Ton und Talk besteht.

7. Elektrisches Gerät nach Anspruch 1 oder 2, **dadurch gekennzeichnet, dass** die feste dielektrische Schicht, die aus einem Material hergestellt ist, das Aluminiumoxid umfasst, eine Dicke zwischen 10 und 100 $\mu$m hat.

8. Elektrisches Gerät nach einem der Ansprüche 1 bis 7, **dadurch gekennzeichnet, dass** die feste dielektrische Schicht in Form eines Films oder eines Pulvers vorliegt.

9. Elektrisches Gerät nach einem der Ansprüche 1 bis 8, **dadurch gekennzeichnet, dass** das Verdünnungsgas aus Kohlendioxid, Stickstoff, Sauerstoff, Luft und Gemischen davon ausgewählt ist.

10. Elektrisches Gerät nach einem der vorhergehenden Ansprüche, **dadurch gekennzeichnet, dass** das Gerät ein elektrischer Transformator mit Gasisolierung, eine Leitung mit Gasisolierung zum Transport oder zur Verteilung von Elektrizität, ein Element zum Anschluss an andere Ausrüstungen des Netzwerks oder ein elektrisches Gerät zum Verbinden / Trennen ist.

11. Verwendung von Heptafluorisobutyronitril im Gemisch mit einem Verdünnungsgas nach Anspruch 1 oder 9 als Gas zur elektrischen Isolierung und / oder zur Löschung von Lichtbögen in einem elektrischen Mittel- oder Hochspannungsgerät, dessen elektrische Komponenten, wo der Koeffizient zur Verwendung des elektrischen Feldes größer oder gleich 0,2 ist, mit einer festen Isolierschicht bedeckt sind, deren Dicke kleiner oder gleich 1 mm ist und die aus einem Material hergestellt ist, das ein Polyepoxidharz, das gegebenenfalls einen Füllstoff enthält, ein Polyurethanharz, das gegebenenfalls einen Füllstoff enthält, oder Aluminiumoxid wie in einem der Ansprüche 1 bis 8 definiert umfasst.

## Claims

1. Medium- or high-voltage equipment including a leaktight enclosure in which there are located electrical components covered with a solid dielectric layer and a gaseous medium for providing electrical insulation and/or for extinguishing electric arcs that are likely to occur in said enclosure, the gaseous medium comprising heptafluoroisobutyronitrile in a mixture with a dilution gas; **characterized in that** the thickness of the solid dielectric layer on the electrical components where the utilization factor of the electric field is greater than or eaqual to 0.2 is less than 1 mm; and
**in that** said dielectric layer is made of a material comprising a polyepoxide resin optionally containing a filler, a polyurethane resin optionally containing a filler, or aluminum oxide.

2. Equipment according to claim 1, **characterized in that** said electrical components are rough cast.

3. Equipment according to claim 1, **characterized in that** said solid dielectric layer made of a material comprising a polyepoxide resin optionally containing a filler or a polyurethane resin optionally containing a filler has a thickness lying in the range 10 to 500 $\mu$m.

4. Equipment according to any one of claims 1 to 3, **characterized in that** said polyepoxide resin comprises or is constituted by a polyepoxide-polysiloxane resin or a polyepoxide-polyester resin.

5. Equipment according to any one of claims 1 to 4, **characterized in that** said filler is present in the form of particles such as nanoparticles.

6. Equipment according to any one of claims 1 to 5, **characterized in that** said filler is made of a material selected from the group consisting of alumina, silica, titanium oxide, calcium carbonate, zinc oxide, wollastonite, quartz, graphite, clay, and talc.

7. Equipment according to claim 1, **characterized in that** said solid dielectric layer made of a material comprising aluminum oxide has a thickness lying in the range 10 and 100 $\mu$m.

8. Equipment according to any one of claims 1 to 7, **characterized in that** said solid dielectric layer is present in the form of a film or a powder.

9. Equipment according to any one of claims 1 to 8, **characterized in that** said dilution gas is selected from carbon dioxide, nitrogen, oxygen, air, and mixtures thereof.

10. Equipment according to any of the preceding claims, **characterized in that** said equipment is a gas-insulated electrical transformer, a gas-insulated line for transporting or distributing electricity, an element for connecting to other pieces of equipment in the network, or a connector/disconnector.

11. The use of heptafluoroisobutyronitrile in a mixture with a dilution gas as defined in claim 1 or 9 as gas for electrical insulation and/or for electric arc extinction in medium- or high-voltage equipment in which electrical components where the utilization factor of the electric field is greater than or equal to 0.2 are covered in a solid insulating layer of thickness that is less than to 1 mm and made of a material comprising a polyepoxide resin optionally containing a filler, a polyurethane resin optionally containing a filler, or aluminum oxide as defined in any one of claims 1 to 8.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014037566 A
- WO 2015040069 A
- WO 2010139906 A
- EP 1359197 A